# EUROPÄISCHE PATENTSCHRIFT

(11) **EP 2 731 834 B1**
(45) Veröffentlichungstag und Bekanntmachung des Hinweises auf die Patenterteilung: **12.09.2018**
(21) Anmeldenummer: 12732676.7
(22) Anmeldetag: 06.07.2012
(51) Int. Cl.: B60S 1/40

(54) **WISCHHEBEL FÜR EINE SCHEIBENWISCHVORRICHTUNG**
WIPER ARM FOR A WINDSHIELD WIPING DEVICE
BRAS D'ESSUIE-GLACE

(30) Priorität: 13.07.2011 DE 102011079051
(43) Veröffentlichungstag der Anmeldung: 21.05.2014
(73) Patentinhaber: Robert Bosch GmbH, 70442 Stuttgart (DE)
(72) Erfinder: KRAEMER, Godelieve, 76549 Huegelsheim (DE)
(86) Internationale Anmeldenummer: PCT/EP2012/063296
(87) Internationale Veröffentlichungsnummer: WO 2013/007651

(56) Entgegenhaltungen:
- EP-A1- 2 080 680
- DE-A1- 10 320 930
- DE-A1-102008 033 634
- FR-A1- 2 389 519

## Beschreibung

Die Erfindung betrifft einen Wischhebel für eine Scheibenwischvorrichtung, insbesondere eines Kraftfahrzeugs.

### Stand der Technik

Ein herkömmlicher Wischhebel einer Scheibenwischvorrichtung eines Kraftfahrzeugs weist in der Regel an einem freien Ende einen Steckschnabel auf, in welchem eine Montieröffnung angeordnet ist, in der ein Wischblatt im Wesentlichen senkrecht zu einer Längsausrichtung des Wischhebels montier- und demontierbar ist. Zum Montieren sollte ein Nietstift bzw. eine wenigstens teilweise zylindrische Montierachse des zu montierenden Wischblatts bezüglich einer Ausnehmung im Steckschnabel möglichst genau positioniert werden, um danach das Wischblatt in vertikaler Richtung in die Montieröffnung einzurasten. Dies kann beispielsweise bei ungünstigen Sichtverhältnissen problematisch sein, vor allem wenn der Wischhebel nur geringfügig angehoben werden kann, bzw. nicht abklappbar ist.

Aus der FR 2 389 519 A1, EP 2 080 680 A1, DE 10 2008 033634 A1 und DE 103 20 930 A1 sind Wischhebel für eine Scheibenwischvorrichtung bekannt, wobei der Wischhebel an einem freien Ende eine Montiereinrichtung zum Montieren eines Wischblatts aufweist, die eine Ausnehmung umfasst. Die Ausnehmung ist derart ausgebildet, dass das Wischblatt im Wesentlichen senkrecht oder schräg zu einer Längsausrichtung des Wischhebels in die Ausnehmung einführbar ist, wobei das Wischblatt in der Ausnehmung im Wesentlichen in Längsausrichtung des Wischhebels einrast- und entrastbar ist.

### Offenbarung der Erfindung

Es ist die Aufgabe der Erfindung, einen Wischhebel für eine Scheibenwischvorrichtung derart auszugestalten, dass ein Wischblatt auf komfortable Weise im Wischhebel montiert und demontiert werden kann.

Die Erfindung wird gelöst mittels eines Wischhebels für eine Scheibenwischvorrichtung, wobei der Wischhebel an einem freien Ende eine Montiereinrichtung zum Montieren eines Wischblatts aufweist, wobei die Montiereinrichtung eine Ausnehmung aufweist, die derart ausgebildet ist, dass das Wischblatt im Wesentlichen senkrecht zu einer Längsausrichtung des Wischhebels in die Ausnehmung einführbar ist. Der Wischhebel zeichnet sich dadurch aus, dass das Wischblatt in der Ausnehmung im Wesentlichen in Längsausrichtung des Wischhebels einrast- und entrastbar ist.

Mittels des erfindungsgemäßen Wischhebels ist es vorteilhaft möglich, ein Wischblatt in den Wischhebel auf einfache und sichere Weise in einem zweistufigen Verfahren zu montieren bzw. aus dem Wischhebel in einem zweistufigen Verfahren zu demontieren. In einer ersten Stufe wird das Wischblatt im Wesentlichen in vertikaler Richtung zum Wischhebel in die Ausnehmung der Montiereinrichtung eingelegt. In einer zweiten Stufe wird das Wischblatt in der Ausnehmung der Montiereinrichtung im Wesentlichen in Längsausrichtung des Wischhebels montiert bzw. demontiert. Auf diese Weise kann das Montieren/Demontieren des Wischblatts vorteilhaft mittels eines lediglich geringfügigen Anhebens des Wischhebels durchgeführt werden. Eine Gefahr eines Verlierens des Wischblatts ist dadurch vorteilhaft minimiert. Aufgrund einer Ausrichtung der Montage- bzw. Demontagekräfte entlang der Längsausrichtung des Wischhebels ist zudem eine Kraftgeometrie definiert an einer Längsausrichtung des Wischhebels orientiert und ist dadurch besser kontrollierbar. Die Erfindung sieht vor, dass die Ausnehmung von zwei Schenkeln begrenzt ist. Dadurch wird ein Clipshaken bereitgestellt, der ein sicheres Einrasten des Wischblatts in den Wischhebel und einen stabilen Sitz des Wischblatts im Wischhebel unterstützt. Die Erfindung sieht vor, dass die Schenkel jeweils von einer, im wesentlichen parallel zum jeweiligen Schenkel angeordneten Fuge begrenzt sind. Mittels der die Ausnehmung begrenzenden Fuge kann das Wischblatt durch ein Aufweiten der Schenkel in die Ausnehmung eingerastet bzw. aus der Ausnehmung entrastet werden. Vorteilhaft wird auf diese Weise eine elastische Eigenschaft der Schenkel der Montiereinrichtung ausgenutzt, um einen Montierstift im Wischblatt klemmend zu befestigen und dadurch einen sicheren Sitz des Wischblatts im Wischhebel zu unterstützen.

Eine bevorzugte Ausführungsform des Wischhebels ist dadurch gekennzeichnet, dass die Montiereinrichtung an einem freien Ende ein die Ausnehmung begrenzendes Anschlagselement aufweist. Mit dem Anschlagselement wird eine Art von Verliersicherung für das Wischblatt bereitgestellt, die es ermöglicht, dass das Wischblatt beim Demontieren aus der Montiereinrichtung nicht in unerwünschter Weise aus der Montiereinrichtung des Wischhebels herausfällt bzw. nicht unkontrolliert herausgezogen wird. Vorteilhaft ist dadurch eine erhöhte Demontagesicherheit für das Wischblatt unterstützt. Die Erfindung sieht vor, dass die Montiereinrichtung in einem einer zu wischenden Scheibe zugewandten Abschnitt ein Schutzelement aufweist, welches im Wesentlichen gegenüber der Ausnehmung angeordnet ist. Mittels des Schutzelements kann für den Wischhebel beim Einlegen des Wischblatts in den Wischhebel vorteilhaft eine Schutz- bzw. Führungsfunktion bereitgestellt werden. Das Schutzelement unterstützt, dass der die Ausnehmung begrenzende untere Schenkel bei einem deplazierten Einführen des Wischblatts nicht unerwünscht mechanisch überbelastet wird und somit die Montiereinrichtung keinen Schaden erleidet.

Eine bevorzugte Verbindung des Wischhebels sieht vor, dass das Schutzelement ein bogenförmiges Führungselement aufweist, welches der Ausnehmung zugewandt ist. Mittels des Führungselements des Schutzelements ist unterstützt, dass das Wischblatt sicher in die Ausnehmung der Montiereinrichtung eingeführt werden kann. Insbesondere übernimmt das Führungselement bei einem deplazierten Ansetzen des Wischblatts eine Führungsfunktion, sodass das Wischblatt relativ zur Ausnehmung exakt ausgerichtet wird und danach präzise in die Ausnehmung eingelegt werden kann. Somit ist auch bei schlechten Sichtverhältnissen oder sonstigen ungünstigen Rahmenbedingungen eines Wischblatttauschs ein einfaches und komfortables Einführen des Wischblatts in den Wischhebel unterstützt.

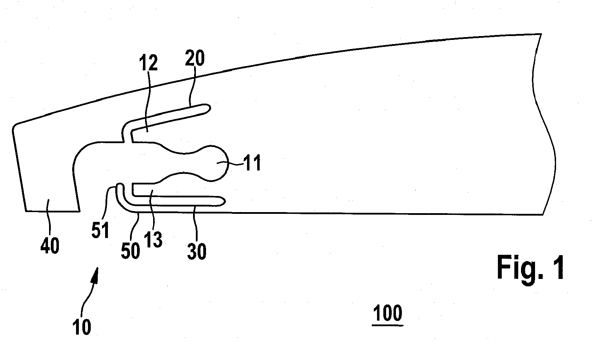

Die Erfindung wird nachfolgend anhand einer einzelnen Figur 1 näher beschrieben. Die Figur 1 dient vor allem einer Erläuterung der erfindungswesentlichen Prinzipien und ist nicht dazu gedacht, dass ihr irgendwelche konkreten Konstruktionsmerkmale, Abmessungen, Maßstabsverhältnisse oder dergleichen entnommen werden können.

Figur 1 zeigt in prinzipieller Weise eine Montiereinrichtung eines erfindungsgemäßen Wischhebels, die an einem freien Ende des Wischhebels einer Scheibenwischvorrichtung (nicht dargestellt), insbesondere eines Kraftfahrzeugs angeordnet ist.

Die Figur 1 zeigt ein freies Ende eines Wischhebels 100, an dem eine Montiereinrichtung 10, beispielsweise in Form eines Steckschnabels, zum Montieren bzw. Demontieren eines Wischblatts (nicht dargestellt) angeordnet ist. Die Montiereinrichtung 10 weist eine sich in Längsausrichtung des Wischhebels 100 erstreckende, länglich ausgebildete Ausnehmung 11 auf, die durch zwei längliche, im Wesentlichen gleich lange Schenkel 12, 13 wie die Ausnehmung 11 begrenzt ist. Dabei begrenzt ein erster Schenkel 12 die Ausnehmung 11 an einer der zu wischenden Scheibe (nicht dargestellt) abgewandten Seite der Ausnehmung 11. Ein zweiter Schenkel 13 begrenzt die Ausnehmung 11 an einer der zu wischenden Scheibe zugewandten Seite der Ausnehmung 11. Jeweils parallel zu den Schenkeln 12, 13 ist im Wischhebel 100 jeweils eine Fuge 20, 30 angeordnet. Die Fugen 20, 30 sind vorzugsweise im Wesentlichen gleich lang wie die Schenkel 12, 13. Durch diese Fugengeometrie kann eine Elastizität der Schenkel bestmöglich ausgenutzt werden.

Die Ausnehmung 11 weist eine schlüssellochartige bzw. augenartige Umfangsbegrenzung auf, wobei ein mittlerer Abschnitt der Ausnehmung 11 im Vergleich zu einem vorderen und hinteren Abschnitt der Ausnehmung 11 eine geringere lichte Öffnung aufweist. Auf diese Weise ist ein sicherer, klemmender Sitz des Montierstifts des Wischblatts in der Ausnehmung 11 unterstützt.

Beim Montieren des Wischblatts können sich die beiden Schenkel 12, 13 aufgrund des durch die Fugen 20, 30 gebildeten Bewegungsspielraums aufdehnen, um dadurch den Montierstift des Wischblatts über den mittleren, verengten Bereich der Ausnehmung 11 in eine Rastposition zu führen. Die jeweils im Wesentlichen parallel zu den Schenkeln 12, 13 angeordneten schmalen Fugen 20, 30 dienen auch dazu, innere mechanische Spannungen der Schenkel 12, 13 beim Montieren/Demontieren zu begrenzen, um dadurch eine Langlebigkeit der Schenkel 12, 13 zu unterstützen.

Am freien Ende des Wischhebels 100 bzw. der Montiereinrichtung 10 ist ferner ein Anschlagselement 40 vorzugsweise integral mit dem Wischhebel 100 angeordnet. Zudem ist an einem unteren, der zu wischenden Scheibe zugewandten Abschnitt der Montiereinrichtung 10 ein Schutzelement 50 vorzugsweise integral mit dem Wischhebel 100 angeordnet. Das Schutzelement 50 weist an einem, dem freien Ende der Montiereinrichtung 10 zugewandten Ende einen bogenförmigen Fortsatz 51 auf, wobei ein Bogen bzw. eine Krümmung gegen das Innere der Ausnehmung 11 gerichtet ist.

Das Montieren eines Wischblatts in die Montiereinrichtung 10 wird zweistufig durchgeführt. In einer ersten Stufe wird dabei das Wischblatt, nach einem geringfügigen Anheben des Wischhebels 100, im Wesentlichen vertikal von unten in die Montiereinrichtung 10 eingelegt. Das Führungselement 51 übernimmt dabei eine Schutz- und Führungsfunktion für das Wischblatt, um das Wischblatt auch bei schlechten Sichtverhältnissen und deplaziertem Ansetzen zielsicher in die Montiereinrichtung 10 einführen zu können und dadurch ein unbeabsichtigtes Beschädigen des zweiten Schenkels 13 zu verhindern.

Sobald das Wischblatt in die Ausnehmung 11 eingelegt worden ist, wird ein zweiter Schritt des Montiervorgangs durchgeführt. Dabei wird das Wischblatt im Wesentlichen im Wesentlichen horizontal bzw. in Längsausrichtung des Wischhebels 100 in die Ausnehmung 11 eingerastet. Dabei dehnen sich die beiden Schenkel 12, 13 aufgrund des durch die Fugen 20, 30 gebildeten Spielraums in der Montiereinrichtung 10 im Wesentlichen vertikal zum Wischhebel 100 auf, wodurch das Einrasten des Wischblatts in die Ausnehmung 11 erleichtert wird. Die erwähnte schlüssellochartige Ausnehmung 11 unterstützt einen sicheren Sitz des Montierstifts des Wischblatts in der Ausnehmung 11.

Die Demontage des Wischblatts aus dem Wischhebel 11 erfolgt in umgekehrter Reihenfolge wie die Montage, wiederum in einem zweistufigen Verfahren. Nach einem geringfügigen Anheben des Wischhebels 100 wird das Wischblatt im Wesentlichen in Längsausrichtung des Wischhebels 100 in Richtung auf die Montiereinrichtung 10 hin gezogen. Dadurch entrastet der Montierstift des Wischblatts 100 aus der Ausnehmung 11 und das Wischblatt liegt nunmehr frei zur Entnahme lose in der Ausnehmung 11. Eine vom Wischhebel 100 auf die Scheibe ausgeübte Vorspannung kann in diesem Stadium als Verlierschutz für das Wischblatt genutzt werden.

Bei einer etwas erhöhten Demontagekraft bzw. bei einem abrupten Entrasten des Wischblatts aus der Ausnehmung 11 kann das Wischblatt an das Anschlagselement 40 anschlagen. Dadurch ist unterstützt, dass das Wischblatt in diesem Fall nicht zu Boden fällt und somit durch den Anwender permanent kontrollierbar ist. Auf diese Weise fungiert das Anschlagselement 40 während des Demontagevorgangs als eine nützliche Verliersicherung für das Wischblatt. In einem zweiten Schritt des Demontagevorgangs wird das Wischblatt im Wesentlichen vertikal nach unten aus der Ausnehmung 11 der Montiereinrichtung 10 entnommen.

Gegenüber herkömmlichen Montiereinrichtungen zeichnet sich die erfindungsgemäße Montiereinrichtung 10 dadurch aus, dass der Wischhebel 100 gegenüber herkömmlichen Wischhebeln vorteilhaft wesentlich geringer angehoben werden muss und das Wischblatt dadurch während des gesamten Montier- bzw. Demontiervorgangs durch den Anwender verbessert kontrollierbar ist. Erfindungsgemäß wird das Wischblatt im Unterschied zu herkömmlichen Systemen zum Montieren im Wesentlichen parallel zu einer Längsausrichtung des Wischhebels eingerastet. Zu einem Entrasten des Wischblatts kann in einfacher Weise das Wischblatt im Wesentlichen horizontal bzw. parallel zur Längsausrichtung des Wischhebels 100 aus der Ausnehmung 11 der Montiereinrichtung 10 gezogen werden. Sowohl beim Montieren als auch beim Demontieren des Wischblatts gibt die Geometrie des Wischhebels 100 im Wesentlichen eine Kraftgeometrie vor. Das Schutzelement 50 stellt eine wirkungsvolle Führungsfunktion für den Montierstift des Wischblatts sowie eine Schutzfunktion für den als Clipshaken fungierenden zweiten Schenkel 13 bereit. Dadurch ist ein schnelles und komfortables Montieren bzw. Demontieren des Wischblatts und ein erhöhter Schutz, insbesondere für den zweiten Schenkel 13 der Montiereinrichtung 10 möglich, der ohne das Schutzelement 50 einer unter Umständen unzulässig hohen Vertikalkraft von unten ausgesetzt wäre.

In vorteilhafter Weise können mittels des erfindungsgemäßen Wischhebels jegliche Typen von herkömmlichen Wischblättern verwendet werden. Dadurch können kostenschonend konventionelle Wischblätter im erfindungsgemäßen Wischhebel verwendet werden. Weiterhin berücksichtigt der erfindungsgemäße Wischhebel in vorteilhafter Weise natürliche Bewegungsmuster des Anwenders, welche in der Regel danach trachten, eine auf einen Gegenstand ausgeübte Kraft im Wesentlichen an der Geometrie des Gegenstands auszurichten. Mittels der Erfindung kann sich der Anwender beim Montieren bzw. Demontieren des Wischblatts an der Längsgeometrie des Wischhebels orientieren und dadurch eine Kraft richtungs- und größenmäßig kontrolliert aufbringen, was ein definiertes Montieren bzw. Demontieren des Wischblatts unterstützt.

Es versteht sich von selbst, dass die in Figur 1 schematisch dargestellte Ausführungsform der Ausnehmung 11 lediglich als beispielhaft für die Erfindung anzusehen ist. Jegliche alternative Ausgestaltungen der Ausnehmung 11, welche es dem Anwender ermöglichen, eine im Wesentlichen in Längsrichtung des Wischhebels 100 ausgerichtete Kraft beim Montieren bzw. Demontieren des Wischblatts anzuwenden, sind für den erfindungsgemäßen Wischhebel ebenso denkbar. Ebenfalls ist die schematische Darstellung der Fugen 20, 30 beispielhaft für die Erfindung. Die Fugengeometrie kann einseitig bzw. in alternativer Form gestaltet werden, oder, wenn es die Geometrie zulässt, komplett entfallen.

Ein Fachmann wird die beschriebenen Merkmale der Erfindung bei Bedarf in geeigneter Weise abändern bzw. miteinander kombinieren.

## Patentansprüche

1. Wischhebel (100) für eine Scheibenwischvorrichtung, wobei der Wischhebel (100) an einem freien Ende eine Montiereinrichtung (10) zum Montieren eines Wischblatts aufweist, wobei die Montiereinrichtung (10) eine Ausnehmung (11) aufweist, die derart ausgebildet ist, dass das Wischblatt im Wesentlichen senkrecht zu einer Längsausrichtung des Wischhebels (100) in die Ausnehmung (11) einführbar ist, wobei das Wischblatt in der Ausnehmung (11) im Wesentlichen in Längsausrichtung des Wischhebels (100) einrast- und entrastbar ist, **dadurch gekennzeichnet, dass** die Montiereinrichtung (10) in einem, einer zu wischenden Scheibe zugewandten Abschnitt ein Schutzelement (50) aufweist, welches im Wesentlichen gegenüber der Ausnehmung (11) angeordnet ist, wobei die Ausnehmung (11) von zwei Schenkeln (12, 13) begrenzt ist und die Schenkel (12, 13) jeweils von einer, im Wesentlichen parallel zum jeweiligen Schenkel (12, 13) angeordneten Fuge (20, 30) begrenzt sind und das Schutzelement (50) eine Schutzfunktion für den zweiten Schenkel (13) bereitstellt.

2. Wischhebel nach einem der Ansprüche 1, **dadurch gekennzeichnet, dass** die Montiereinrichtung (10) an einem freien Ende ein die Ausnehmung (11) begrenzendes Anschlagselement (40) aufweist.

3. Wischhebel nach einem der Ansprüche 1 bis 2, **dadurch gekennzeichnet, dass** das Schutzelement (50) ein bogenartiges Führungselement (51) aufweist, welches der Ausnehmung (11) zugewandt ist.

## Claims

1. Wiper arm (100) for a window wiping apparatus, the wiper arm (100) having, at a free end, a mounting device (10) for mounting a wiper blade, the mounting device (10) having a recess (11) which is configured in such a way that the wiper blade can be introduced into the recess (11) substantially perpendicularly with respect to a longitudinal orientation of the wiper arm (100), it being possible for the wiper blade to be locked and unlocked in the recess (11) substantially in the longitudinal orientation of the wiper arm (100), **characterized in that** the mounting device (10) has a protective element (50) in a section which faces the window to be wiped, which protective element (50) is arranged substantially opposite the recess (11), the recess (11) being delimited by two limbs (12, 13), and the limbs (12, 13) being delimited in each case by a gap (20, 30) which is arranged substantially parallel to the respective limb (12, 13), and the protective element (50) providing a protective function for the second limb (13).

2. Wiper arm according to Claim 1, **characterized in that** the mounting device (10) has, at a free end, a stop element (40) which delimits the recess (11).

3. Wiper arm according to either of Claims 1 and 2, **characterized in that** the protective element (50) has an arcuate guide element (51) which faces the recess (11).

## Revendications

1. Levier d'essuie-glace (100) pour un dispositif d'essuie-glace, le levier d'essuie-glace (100) présentant, à une extrémité libre, un dispositif de montage (10) pour le montage d'un balai d'essuie-glace, le dispositif de montage (10) présentant un évidement (11) qui est réalisé de telle sorte que le balai d'essuie-glace puisse être introduit essentiellement perpendiculairement à une orientation longitudinale du levier d'essuie-glace (100) dans l'évidement (11), le balai d'essuie-glace pouvant être encliqueté et désencliqueté dans l'évidement (11) essentiellement dans l'orientation longitudinale du levier d'essuie-glace (100), **caractérisé en ce que** le dispositif de montage (10) présente un élément de protection (50) dans une portion tournée vers la vitre à essuyer, lequel élément de protection est disposé essentiellement en face de l'évidement (11), l'évidement (11) étant limité par deux branches (12, 13) et les branches (12, 13) étant limitées à chaque fois par un joint (20, 30) disposé essentiellement parallèlement à la branche respective (12, 13) et l'élément de protection (50) assurant une fonction de protection pour la deuxième branche (13).

2. Levier d'essuie-glace selon l'une quelconque des revendications 1, **caractérisé en ce que** le dispositif de montage (10) présente, à une extrémité libre, un élément de butée (40) limitant l'évidement (11).

3. Levier d'essuie-glace selon l'une quelconque des revendications 1 à 2, **caractérisé en ce que** l'élément de protection (50) présente un élément de guidage (51) de forme arquée qui est tourné vers l'évidement (11).
